# EUROPEAN PATENT APPLICATION

(11) **EP 4 002 257 A1**
(43) Date of publication of application: **25.05.2022**
(21) Application number: 21205174.2
(22) Date of filing: 28.10.2021
(51) Int. Cl.: G06Q 30/06, G07F 7/06, G07G 1/01, G07G 1/00, G07G 3/00

(54) **AUTOMATED SHOPPING CART**

(30) Priority: 19.11.2020 US 202016952708
(71) Applicant: eBay, Inc., San Jose, CA 95125 (US)
(72) Inventor: SRIRAMAN, Nikhil, San Jose, 95125 (US); FRANCISSEN, Vernon William, San Jose, 95125 (US)
(74) Representative: Müller-Boré & Partner Patentanwälte PartG mbB

(57) **Abstract**

Technologies are shown for automatically registering items in an automated physical shopping cart involving receiving image data for items in the cart, detecting a change in a weight of items in the cart and, determining whether a correlated item was identified in the image data. If no correlated item was identified, a message is displayed indicating that no correlated item was detected and a user can be prompted. A user device may be used to scan items and display messages for the cart. Items may be scanned using image recognition to determine item information. An item weight may be determined based on the change in the weight of items in the cart and priced accordingly to weight. A notification for an item in the cart may be provided to an inventory or a shopping list application indicating that the correlated item was added to the cart.

## Description

### BACKGROUND

Typically, a customer shopping in a store places items to be purchased in a shopping cart. When shopping is complete, the customer proceeds to a check out station with the shopping cart, where the items in the shopping cart are scanned and a payment transaction is performed.

Often, information regarding items added to the cart cannot be dynamically displayed to the customer, such as information about item identifier, price, description, product reviews, etc. Also, items typically cannot be processed until the check-out station, which can result in delays and crowding for customers waiting to check-out.

Some conventional solutions have utilized dedicated scanning devices to scan items, such as laser scanners to scan bar codes or Radio Frequency Identifier (RFID) scanners to scan RFID tags. However, these scanning devices are typically specialized devices that have limited applicability to other uses and represent additional equipment and expense.

It is with respect to these and other considerations that the disclosure made herein is presented.

### SUMMARY

The disclosed technology is directed towards automatically registering items in an automated physical shopping cart. In certain simplified examples of the disclosed technologies, a computer-implemented method, system or computer readable medium is shown that involves detecting a change in a weight of items in the cart and receiving image data for items in the cart from an optical device. A determination is made as to whether a correlated item was identified in the received image data that was scanned in correlation with the detected change in the weight of items in the cart. If no correlated item was identified, then a message is caused to be displayed on a User Interface (UI) indicating that no correlated item was identified.

Some examples involve generating a prompt on the UI asking a user to enter item information for the correlated item. In other examples, the image data for items in the cart is received from an optical device in a user client device and the determination as to whether a correlated item was identified is made based on the image data received from the user client device. In certain examples, a message indicating that no item was detected is displayed on the UI of a user client device.

Particular examples of the disclosed technology involved determining a weight of the correlated item based on the change in the weight of items in the cart. A price by weight for the correlated item is obtained and used to calculate a total price for the correlated item based on the weight of the correlated item and the price by weight for the correlated item. The total price for the correlated item can be displayed on the UI.

In yet other examples, if the correlated item was identified, a notification can be sent to an inventory application or a shopping list application indicating that the correlated item was added to the cart. A display of the shopping list can be altered to indicate that an item on the list has been added to the cart.

It should be appreciated that the above-described subject matter may also be implemented as a computer-controlled apparatus, a computer process, a computing system, or as an article of manufacture such as a computer-readable medium. These and various other features will be apparent from a reading of the following Detailed Description and a review of the associated drawings. This Summary is provided to introduce a selection of concepts in a simplified form that are further described below in the Detailed Description.

This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items.
FIGURE 1 is an architectural diagram showing an illustrative example of an architecture suitable for application of the disclosed technology for automatically registering items in an automated physical shopping cart;
FIGURE 2A is a schematic diagram for an example of an automated physical shopping cart for use in the disclosed technology that can detect changes in a weight of items in a basket of the cart;
FIGURE 2B is an architectural diagram showing an illustrative example of an architecture for a cart controller suitable for application of the disclosed technology for automatically registering items in an automated physical shopping cart;
FIGURE 3A is a schematic diagram for an example of a user interface for use in the disclosed technology for automatically registering items in an automated physical shopping cart;
FIGURE 3B is a schematic diagram illustrating an example of item detection in the application of the disclosed technology for automatically registering items in the automated physical shopping cart of FIGURE 2A;
FIGURE 4A is a control flow diagram showing an illustrative example of a process for automatically registering items in an automated physical shopping cart in accordance with the disclosed technology;
FIGURE 4B is a control flow diagram showing an illustrative example of a process for automatically obtaining item information for an item in an automated physical shopping cart in accordance with the disclosed technology;
FIGURE 4C is a control flow diagram illustrating an example of a process for pricing an item based on weight in accordance with the disclosed technology;
FIGURE 4D is a control flow diagram illustrating an example of a process for communicating with a user client in accordance with the disclosed technology;
FIGURE 4E is a control flow diagram illustrating an example of a process in a user client for communicating with a cart controller in accordance with the disclosed technology;
FIGURE 4F is a control flow diagram illustrating an example of a process for communicating with a cart controller to update an inventory or shopping list in accordance with the disclosed technology;
FIGURE 4G is a control flow diagram illustrating an example of a process for committing and confirming a transaction in accordance with the disclosed technology;
FIGURE 5 is a computer architecture diagram illustrating an illustrative computer hardware and software architecture for a computing system capable of implementing aspects of the techniques and technologies presented herein;
FIGURE 6 is a diagram illustrating a distributed computing environment capable of implementing aspects of the techniques and technologies presented herein; and
FIGURE 7 is a computer architecture diagram illustrating a computing device architecture for a computing device capable of implementing aspects of the techniques and technologies presented herein.

### DETAILED DESCRIPTION

The following Detailed Description describes technologies for automatically registering items in an automated physical shopping cart involving detecting a change in a weight of items in the cart and determining whether a correlated item was determined or identified from image data received from an optical device. If no correlated item was identified, a message is displayed indicating that no item was detected and a user can be prompted to rescan the item.

In certain simplified examples of the disclosed technologies, a user device may be used to scan items and display messages for the cart. Optical devices, e.g. cameras, are frequently found in client devices, such as smart phones, tablets and laptop computers. Items may be scanned using an optical device and image recognition utilized to identify the item from image data from the optical device. The optical device can be an optical device attached to the cart or an optical device of a user client device. Image recognition can be performed, in various different examples, by an image recognition capability of a cart controller, an image recognition capability of the user client device, or a server or remote resource based image recognition capability.

An item weight may be determined based on the change in the weight of items in the cart and priced accordingly to weight. A notification for an item in the cart may be provided to an inventory or a shopping list application indicating that the correlated item was added to the cart.

In general terms, the addition of an item to a shopping cart can be detected by a change in a weight of the items in the shopping cart. If no item scan is found in image data for items in the cart that is correlated to the change in weight, then a message can be displayed on a user interface indicating that no scan was found. The user can be prompted to enter item information for the item or re-scan the item.

In some examples, item information, such as an item identifier, description or pricing, can be displayed to a user through a UI. The UI can be mounted on the shopping cart.

In other examples, a cart controller can communicate with a user client device. In some examples, an item can be scanned using optical image recognition capabilities of the user client device. In still other examples, item information and notifications can be displayed to a user using a UI of the user client device.

As will be described in more detail herein, it can be appreciated that implementations of the techniques and technologies described herein may include the use of solid state circuits, digital logic circuits, computer components, and/or software executing on one or more input devices. Signals described herein may include analog and/or digital signals for communicating a changed state of the data file or other information pertaining to the data file.

While the subject matter described herein is presented in the general context of program modules that execute in conjunction with the execution of an operating system and application programs on a computer system, those skilled in the art will recognize that other implementations may be performed in combination with other types of program modules. Generally, program modules include routines, programs, components, data structures, and other types of structures that perform particular tasks or implement particular abstract data types. Moreover, those skilled in the art will appreciate that the subject matter described herein may be practiced with other computer system configurations, including multiprocessor systems, mainframe computers, microprocessor-based or programmable consumer electronics, minicomputers, hand-held devices, and the like.

By the use of the technologies described herein, automatically registering items in an automated physical shopping cart is provided that determines that an item has been added to a cart based on a change in weight. A determination is made from image data obtained from an optical device as to whether an item added to the cart can be identified from the image data from the optical device that correlates to the change in weight. If no correlated item can be identified, then the user can be prompted to identify the item through optical scanning or entry of an item identifier.

One technical effect can be to improve the function of an automated cart by use an optical device to obtain item image data for items in the cart and using the item image data for item identification. Another technical effect can be to that image recognition for item identification can be performed in a user client device or a remote server instead of a cart controller.

Still another technical effect can be to improve the efficiency of the operation of the automated cart by correlating a change in weight of items in the cart with an item added to the cart to avoid missed identification of items added to the cart. A further technical effect can be to utilize an optical device or user interface provided in a user client device for obtaining item image data and displaying messages so that these capabilities do not need to be provided in the cart. Yet another technical effect is that the identification of items added to the cart can be integrated with inventory or shopping list applications.

Other technical effects other than those mentioned herein can also be realized from implementation of the technologies disclosed herein.

In the following detailed description, references are made to the accompanying drawings that form a part hereof, and in which are shown by way of illustration specific configurations or examples. Referring now to the drawings, in which like numerals represent like elements throughout the several figures, aspects of a computing system, computer-readable storage medium, and computer-implemented methodologies for automatically registering items in an automated physical shopping cart will be described. As will be described in more detail below with respect to the figures, there are a number of applications and services that may embody the functionality and techniques described herein.

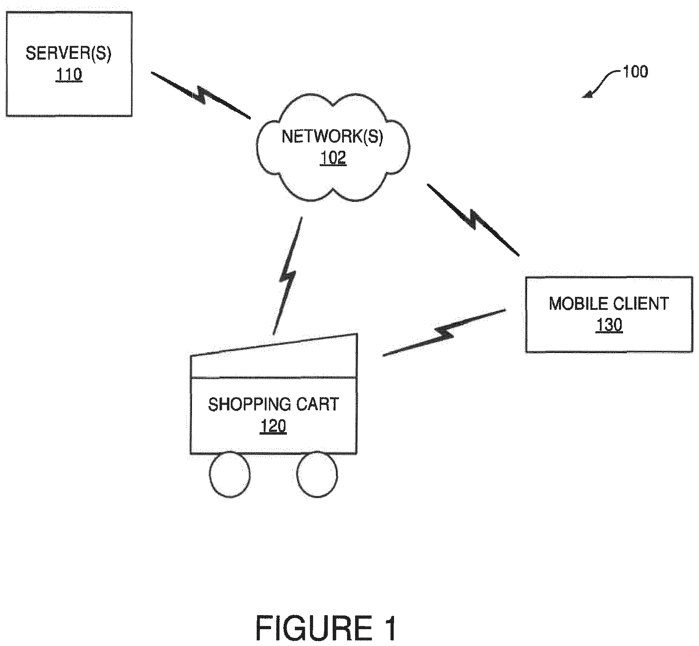

FIGURE 1 is an architectural diagram showing an illustrative example of an architecture 100 suitable for application of the disclosed technology for automatically registering items in an automated physical shopping cart. In the example of FIGURE 1, automated shopping cart 120 can communicate with server 110 and mobile client 130 through network 102. In certain examples, cart 120 can exchange item information and notification with mobile client 130 through network 102. In addition, servers 110 can provide information, such as item or inventory information, or conduct payment transactions. Mobile client 130 can be a user client device carried by a user, such as a smart phone, tablet or similar device.

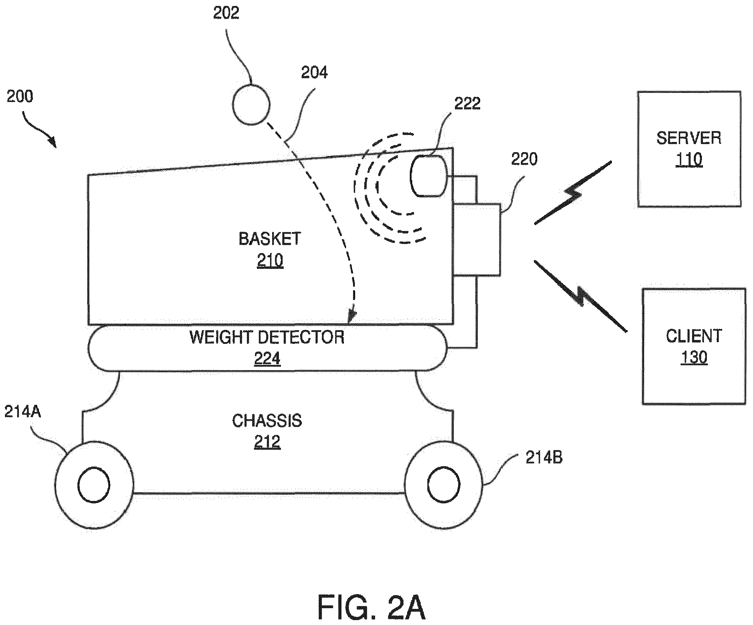

FIGURE 2A is a schematic diagram for an example of an automated physical shopping cart 200 for use in the disclosed technology that can detect changes in a weight of items in a basket 210 of cart 200, such as cart 120 of FIGURE 1. In this example, cart 200 includes a basket 210 for receiving items and a chassis 212 that supports cart 200 and provides mobility, such as with wheels 214A and 214B. A weight detector 224 is positioned between basket 210 and chassis 212 and can detect a weight of items in basket 210. For example, when item 202 is placed in basket 210 at 204, weight detector 224 can detect the change. In some examples, weight detector 224 can quantify the change in the weight of items in basket 210.

Cart 200 also includes cart controller 220, which is attached to cart 200 in this example and is in communication with optical device 222 for image recognition and weight detector 224 through a wired connection, such as a universal serial bus (USB) cable, or a wireless connection, such as a Bluetooth link. Other approaches to communicating data to cart controller 220 from optical device 222 and weight detector 224 can be utilized in accordance with the disclosed technology.

In the example of FIGURE 2A, optical device 222 is configured on basket 210 to optically scan an item as it is added to the basket. As item 202 is placed in basket 210 at 204, optical device 222 collects image data for item 202 and provides the image data to cart controller 220 for image recognition processing. In some examples, a variety of scanners can be utilized in addition to optical device 222 in accordance with the disclosed technology, as is discussed below in greater detail. Note that optical device 222 can be an optical image recognition capability residing in a different device, such as client 130, in accordance with certain aspects of the disclosed technology. Cart controller 220 can also be in communication with other devices, such as server 110 and client 130.

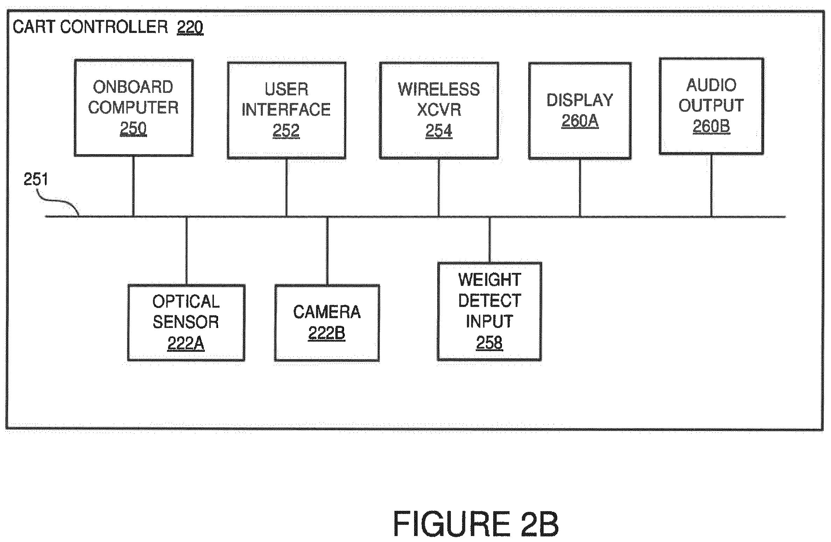

FIGURE 2B is an architectural diagram showing an illustrative example of a client architecture for cart controller 220 that is suitable for application of the disclosed technology for automatically registering items in an automated physical shopping cart 200. In this example, cart controller 220 includes an onboard computer 250 that can be capable of executing processes for optical image recognition, control, display, calculation and communication.

Onboard computer 250 can communicate with optical devices 222, such as optical sensor 222A or camera 222B, and a variety of sensors 256 and Input/Output (I/O) devices through a local network or bus 251. Optical sensor 222A can capture video or photographic image data that can be processed to detect and identify objects, e.g. optical image recognition. Camera 222B can utilize light, such as visible or infrared light, to detect and identify objects. Other optical devices can be utilized in accordance with the disclosed technology.

In this example, user interface (UI) 252 can receive user input requests to cart controller 220, e.g. add item, display item information, or display total price of items. UI 252 can be a graphical user interface or a touch screen interface that combines with display 260A to present information to a user and receive the user's input. Audio output 260B can be a speaker that generates audible signals, such as a first tone indicating a successful item scan or a second tone indicating a failed item scan or no item scan correlated to a change in weight of the items in a basket 210 of cart 200.

Wireless transceiver 254 is a communications device that can be used to send and receive wireless messages, such as item information, notifications or requests. In the present example, wireless transceiver 254 is a relatively short range communication device, such as a wireless local area network (WLAN) device, that can be used to send or receive messages directly with a wireless transceiver in a nearby client device, such as a user client device, or WLAN network access point, such as a communication with servers 110 for item and inventory information.

Note that the optical device 222 can be installed in cart 200 or reside on another device. In some examples, the optical device 222 is installed on cart 200 in order to optically identify items as they are added to the cart. In other examples, optical image recognition capability in another device, such as a user client device with image recognition capabilities, can be utilized to identify items.

Note that optical device 222 is generally a line-of-sight type that can identify or determine an object to which it has an unobstructed path. If an item is obscured by other items or objects in cart 200, then the item might not be optically scanned when the item is added to cart 200 resulting in erroneous or incomplete information regarding the content of the cart.

Weight detector input 258 receives a weight signal from a weight detector mounted in cart 200. The weight signal provided via weight detector input 258 can allow the addition of an item to cart 200 to be determined from a change in weight of the items in cart 200. In some examples, the weight signal can allow a change in weight to be quantified and utilized to measure a weight of an item added to cart 200, e.g. an item that is priced by weight.

As noted above, cart controller 220 can include one or more user interface devices 260 that can be installed on cart 200. In some examples, however, the UI can be provided by an interface in a user client device, such as a smart phone or tablet. For example, information or notifications for display can be sent to the user client device via wireless transceiver 254. This approach can also provide for integration of certain functions on cart 200 with applications executing in the user client device. In one example, when an item is added to cart 200, a message can be sent to the user client device, which can compare the added item to a shopping list and the shopping list display updated to indicate that the item has been added to the cart.

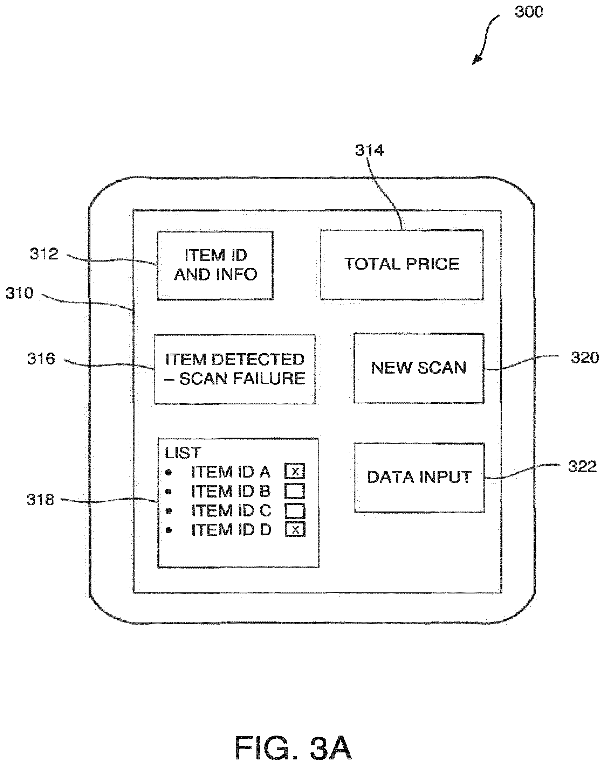

FIGURE 3A is a schematic diagram for an example of a client 300 for use in providing a user interface for the disclosed technology for automatically registering items in an automated physical shopping cart. In this example, client 300 includes a graphical user interface (GUI) screen 310 that can display graphical data and information. In the example shown, display area 312 of GUI 310 is dedicated to display of an item identifier and information, such as a UPC number, name and price of an item. Display area 314 is dedicated to display of a total price of items in the cart. Display area 316 is dedicated to notifications to a user, such as a notification that an item has been weight detected, but an optical scan has failed. Display area 318 is dedicated to displaying a shopping list of items that includes an indication of whether an item is in the shopping cart. Additional display areas can be utilized for a variety of information, such as inventory data, in accordance with the disclosed technology.

GUI 310 can be a touch screen that permits user input from a user of the shopping cart. In one example, display area 320 can be a user input zone that a user touches to initiate a new optical scan of an item. Display area 322 can be a user input zone to initiate user entry of data, such as typing in an item identifier.

In some examples, client 300 can be implemented as a dedicated client device attached to a shopping cart and in communication with cart controller 220. In other examples, client 300 can be a client integrated with cart controller 220. In still other examples, client 300 can be implemented as a client application residing on a user client device, such as a smart phone or a tablet.

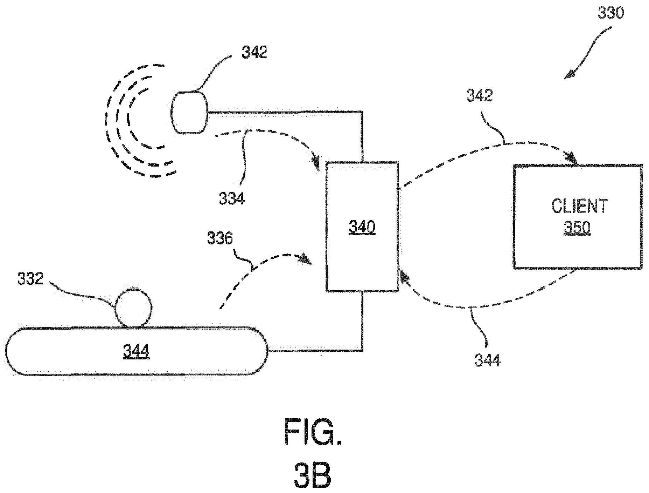

FIGURE 3B is a schematic diagram illustrating an example scenario of item detection in the application 330 of the disclosed technology for automatically registering items in the automated physical shopping cart, such as cart 200 of FIGURE 2A. In this example, item 332 is added to the basket of a cart. An optical device 222 collects video or photographic data for item 332, which is provided, at 334, to cart controller 340 for image recognition processing. The addition of item 332 can also be detected by weight detector 344, which provides a weight detection signal to cart controller 340.

In this example, if cart controller determines that an item has been added to the cart based on weight detection signal 336, but is unable to identify a correlated item identification or scan from optical device 342, e.g. the image data 334 provided to the cart controller 340 from optical device 342 does not permit identification of item 332 through image recognition processing of the image data, then cart controller 340 provides a notification message 342 to client 350 indicating that no correlated item identification was found for item 332. In some examples, notification message 342 can cause a message to be displayed to a user and, in certain examples, cause a prompt to be displayed to request a new scan to obtain the item identification information or entry of item identification information by the user. Client 350 returns the item identification information, at 344, to cart controller 340, where the item identification information is further processed.

Note that a variety of approaches may be utilized that remain consistent with the disclosed technology. For example, a variety of techniques can be utilized to identify an item from image data, such as image recognition performed in the cart controller, image recognition performed in a user client device, or image recognition performed at a remote server, service or resource. In addition, a variety of approaches may be utilized for displaying or outputting information for display, such as a display mounted on the cart or a display of a user client device. A wide variety of approaches may be utilized that are consistent with the disclosed technology.

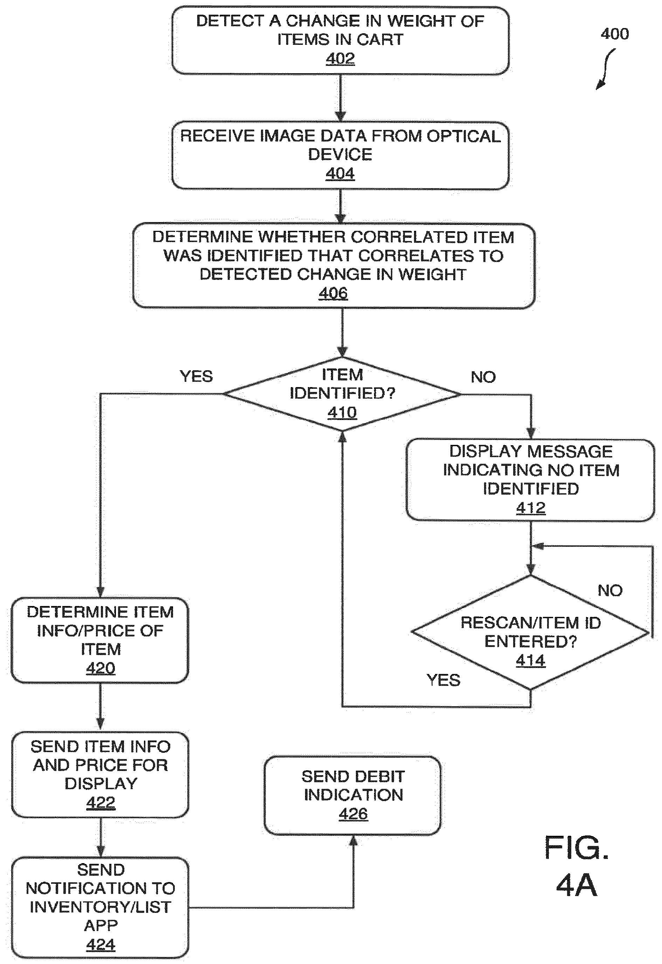

FIGURE 4A is a control flow diagram showing an illustrative example of a process 400 for automatically registering items in an automated physical shopping cart in accordance with the disclosed technology. At 402, a change in weight of the items in a cart, such as cart 200, is detected, e.g. through a weight detection signal provided by a weight detector. At 404, image data is received from an optical device, e.g. optical device 222.

At 406, image recognition processing is performed on the received image data to determine whether a correlated item was identified that correlates to the detected change in weight. For example, an item can be identified from image data received close in time to the time that the change in weight is detected. In another example, timestamp data from the image data can be used to determine whether an item was identified in the cart within a time range of the time that the change in weight was detected. Other approaches identifying the correlated item from the image data may also be suitable for still other examples of the disclosed technology.

If the item was successfully identified, then control branches at 410 to 420. Note that in some examples, image data captured by optical device 222 can be provided to a remote server, which can identify the item through image recognition processing performed at the remote server. Similarly, in other examples, remote computing resources can be utilized to perform image recognition on the image data to identify items.

If the item was not successfully identified, then control branches at 410 to 412 to cause display of a message indicating that no correlated item was identified and, in some examples, prompt a user to rescan the item to identity the item, e.g. by removing and replacing the item in the cart to aid image capture, or enter an item identifier for the item, e.g. using a UI. In certain examples where image data is provided to a remote server, the server may return an indication that the item cannot be identified, which can be processed at 410. If the item identifier is rescanned or an identifier entered, then control branches at 414 to 410 to determine if the item was identified.

At 420, in this example, item information, such as a price, for the identified item is determined. In some examples, the item information and price can be determined from data stored locally in the cart controller. In other examples, the item information can be obtained from a remote server, such as servers 110. At 422, the item information and price can be provided for display to a user.

In some examples, a notification can be sent indicating that the item has been added to the cart. In certain examples, the notification can be sent to an inventory application, such as an inventory application on servers 110. In some examples, the notification can be provided to a shopping list application, which can display information indicating that an item in a set of item identifiers, e.g. a shopping list, has been added to the cart. In certain examples, at 426, a debit indication can be sent to cause a payment transaction to be performed with respect to the items in the cart.

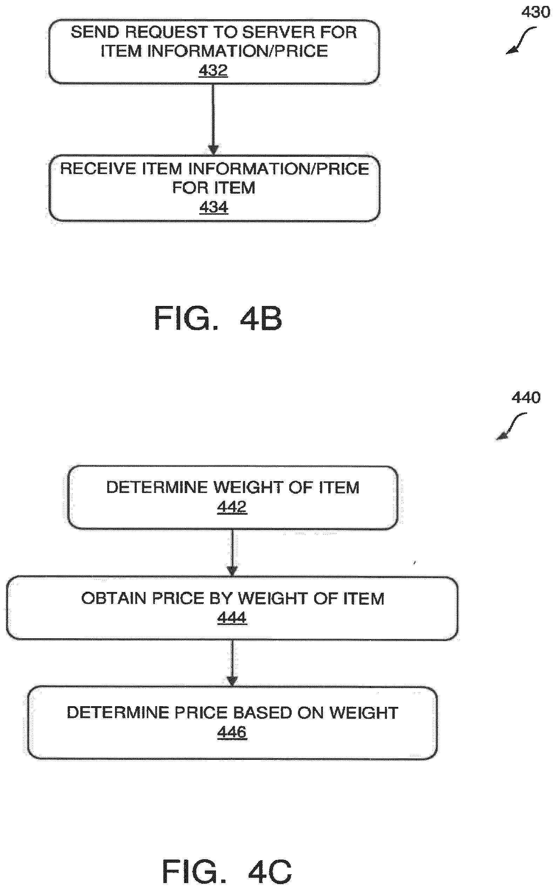

FIGURE 4B is a control flow diagram showing an illustrative example of a process 430 for querying a remote server for item information. At 432, a request with an item identifier can be sent to a server to obtain item information, which can include price and other descriptive information for an item. As noted above, in some examples, image data captured for an item by an optical device can be sent to the server or service, which can determine an identifier for the item based on image recognition processing applied to the image data. At 434, item information for the item, such as item identifier, description or price, can be received and can be displayed or further processed.

FIGURE 4C is a control flow diagram illustrating an example of a process 440 for processing an item that can be priced by weight. At 442, a weight of the item added to the cart is determined from the weight detection signal, e.g. the weight detection signal is configured such that an absolute difference in weight corresponding to the added item can be determined. At 444, a price by weight for the item is obtained, e.g. from a remote server providing item information. At 446, a price for the item based on weight is determined and can be added to a total price for items in the cart. This example may pertain to groceries that are priced by weight, e.g. apples at $1.89 per pound.

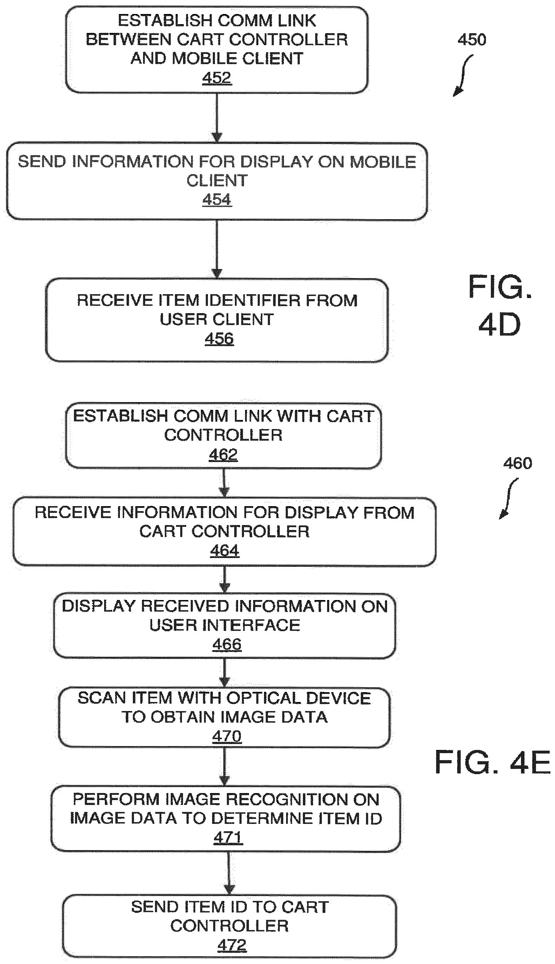

FIGURE 4D is a control flow diagram illustrating an example of a process 450 for communicating with a user client. For example, process 450 may be performed in a cart controller, e.g. cart controller 222, to communicate with a user's mobile client device, e.g. mobile client 130. At 452, a communication link is established between the cart controller and a mobile client, e.g. using wireless transceiver 254 in cart controller 220 shown in FIGURE 2B.

At 454, information is sent to the mobile client for display on the mobile client. For example, cart controller 220 can send item information regarding an identified item to the mobile client. In another example, cart controller 220 can send a notification that a scan of an item failed. At 456, an item identifier can be received from the user client device, such as an item identifier obtained using an image recognition capability in the user client or an identifier entered by a user.

FIGURE 4E is a control flow diagram illustrating an example of a process 460 that can execute in a user client for communicating with a cart controller. In this example, process 460 is configured to operate in coordination with process 450 of FIGURE 4D. At 462, a communication link is established with a cart controller.

At 464, information for display is received from the cart controller, e.g. item information or a scan fail notification. At 466, the received information is displayed on a user interface of the user client, such as in the example illustrated in FIGURE 3A.

If a notification is sent indicating a scan fail, such as in display area 316 of GUI 310 of FIGURE 3A, then the user can perform a new scan of the item by activating user input area 320 to initiate a new scan with an optical device of the user client to obtain image data for the item, at 470. In this example, image recognition can be performed on the image data to determine the item identifier, at 471. Alternatively, the user can enter an item identifier using data input area 322. The item identifier obtained from scanning the item or from user entry can be sent to the cart controller, at 472.

Process 460 can facilitate the use of a user's client device such that a user interface device incorporated into the cart may not be needed. Also, processes 450 and 460 can be adapted so that an image recognition capability of the user client device is utilized to obtain image data for an item instead of a dedicated optical device incorporated into the cart.

Also note that, in certain examples, the image recognition functionality can be provided by a server. In such an example, the user client captures item image data, such as using a camera of a smart phone, and provides the item image data to the server so that the server can identify the item. The server can then return an item identifier and related information for the identified item.

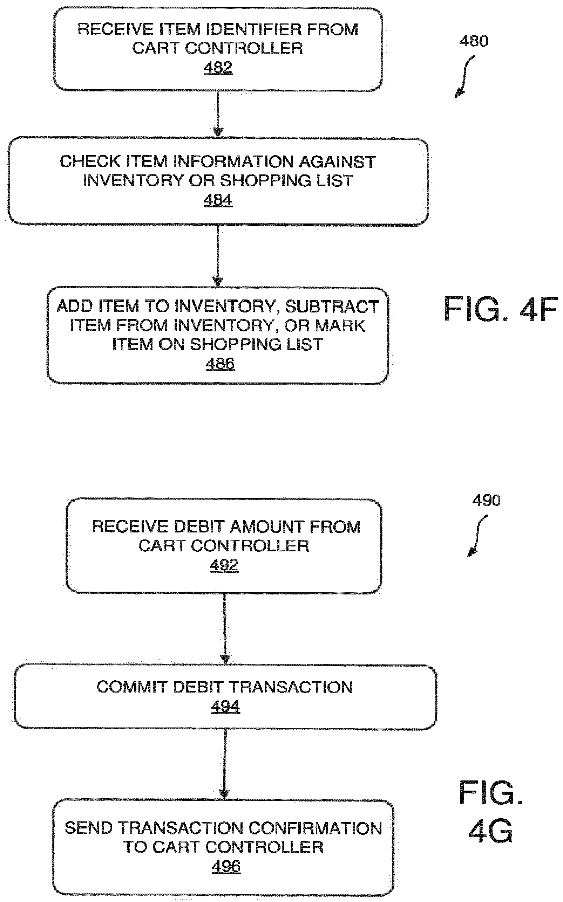

In addition, the implementation of the scan and display functionality in a user client device, e.g. in an application, can facilitate integration with other applications, such as an inventory application or a shopping list application. FIGURE 4F is a control flow diagram illustrating an example of a process 480 in a client for communicating with a cart controller to update an inventory or shopping list.

At 482, an item identifier is received from the cart controller, e.g. as a result of image recognition processing of item image data in the cart controller. At 484, the item identifier is checked against an inventory or shopping list, e.g. to determine if the item is included in an inventory in an inventory application or included in a set of item identifiers in a shopping list application. At 484, the item identifier can be processed for the inventory, e.g. add or subtract from inventory, or the item can be marked as satisfied in a shopping list, such as the X mark associated with ITEM ID A and ITEM ID D in the list in display area 318 of the GUI 310 illustrated in FIGURE 3A.

FIGURE 4G is a control flow diagram illustrating an example of a process 490 in a user client for committing and confirming a transaction. At 492, a debit amount for the items in the cart is received from the cart controller. At 494, the user client commits a debit transaction to pay for the items, e.g. through integration with a payment application in the user client. At 496, a transaction confirmation can be sent to the cart controller that confirms that the items in the cart were paid for, which may allow the user to take the items in the cart home.

It should be appreciated that a variety of different instrumentalities and methodologies can be utilized to establish communication between devices as well as collect and exchange image data and perform image recognition on the image data to identify items without departing from the teachings of the disclosed technology. The disclosed technology provides a high degree of flexibility and variation in the configuration of implementations without departing from the teachings of the present disclosure.

The present techniques may involve operations occurring in one or more machines. As used herein, "machine" means physical data-storage and processing hardware programed with instructions to perform specialized computing operations. It is to be understood that two or more different machines may share hardware components. For example, the same integrated circuit may be part of two or more different machines.

One of ordinary skill in the art will recognize that a wide variety of approaches may be utilized and combined with the present approach to automatically registering items in an automated physical shopping cart. The specific examples of different aspects of automatically registering items in an automated physical shopping cart described herein are illustrative and are not intended to limit the scope of the techniques shown.

### Computer Architectures for Automatically registering items in an automated physical shopping cart

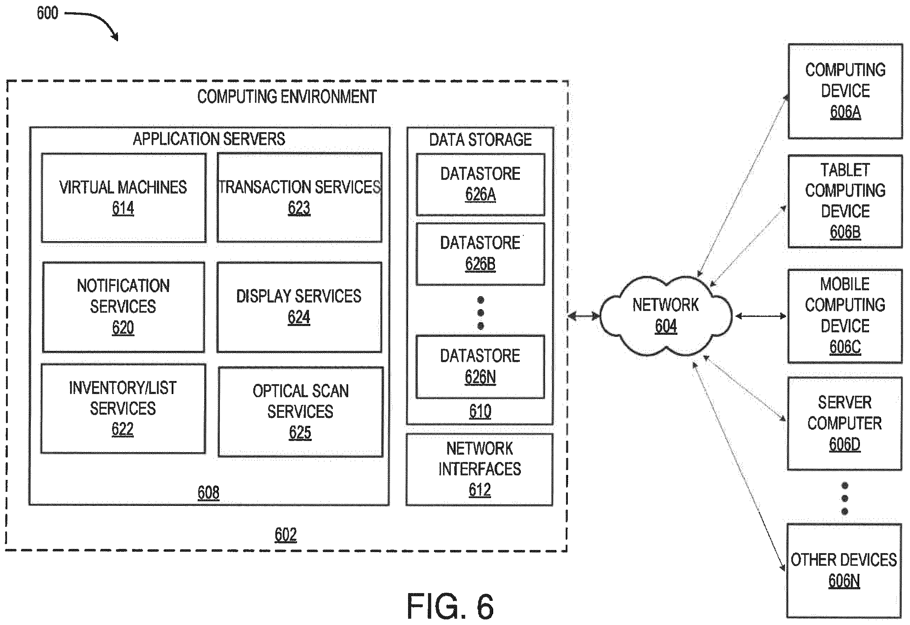

Note that at least parts of processes 400, 430, 440, 450, 460, 480 and 490 of FIGURES 4A, 4B, 4C, 4D, 4E, 4F and 4G and other processes and operations pertaining to automatically registering items in an automated physical shopping cart described herein may be implemented in one or more servers, such as computer environment 600 in FIGURE 6, or the cloud, and data defining the results of user control input signals translated or interpreted as discussed herein may be communicated to a user device for display. Alternatively, the automatically registering items in an automated physical shopping cart processes may be implemented in a client device. In still other examples, some operations may be implemented in one set of computing resources, such as servers, and other steps may be implemented in other computing resources, such as a client device.

It should be understood that the methods described herein can be ended at any time and need not be performed in their entireties. Some or all operations of the methods described herein, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

As described herein, in conjunction with the FIGURES described herein, the operations of the routines (e.g. processes 400, 430, 440, 450, 460, 480 and 490 of FIGURES 4A, 4B, 4C, 4D, 4E, 4F and 4G) are described herein as being implemented, at least in part, by an application, component, and/or circuit. Although the following illustration refers to the components of FIGURES 4A-G, it can be appreciated that the operations of the routines may be also implemented in many other ways. For example, the routines may be implemented, at least in part, by a computer processor or a processor or processors of another computer. In addition, one or more of the operations of the routines may alternatively or additionally be implemented, at least in part, by a computer working alone or in conjunction with other software modules.

For example, the operations of routines are described herein as being implemented, at least in part, by an application, component and/or circuit, which are generically referred to herein as modules. In some configurations, the modules can be a dynamically linked library (DLL), a statically linked library, functionality produced by an application programing interface (API), a compiled program, an interpreted program, a script or any other executable set of instructions. Data and/or modules, such as the data and modules disclosed herein, can be stored in a data structure in one or more memory components. Data can be retrieved from the data structure by addressing links or references to the data structure.

Although the following illustration refers to the components of the FIGURES discussed above, it can be appreciated that the operations of the routines (e.g. processes 400, 430, 440, 450, 460, 480 and 490 of FIGURES 4A, 4B, 4C, 4D, 4E, 4F and 4G) may be also implemented in many other ways. For example, the routines may be implemented, at least in part, by a processor of another remote computer or a local computer or circuit. In addition, one or more of the operations of the routines may alternatively or additionally be implemented, at least in part, by a chipset working alone or in conjunction with other software modules. Any service, circuit or application suitable for providing the techniques disclosed herein can be used in operations described herein.

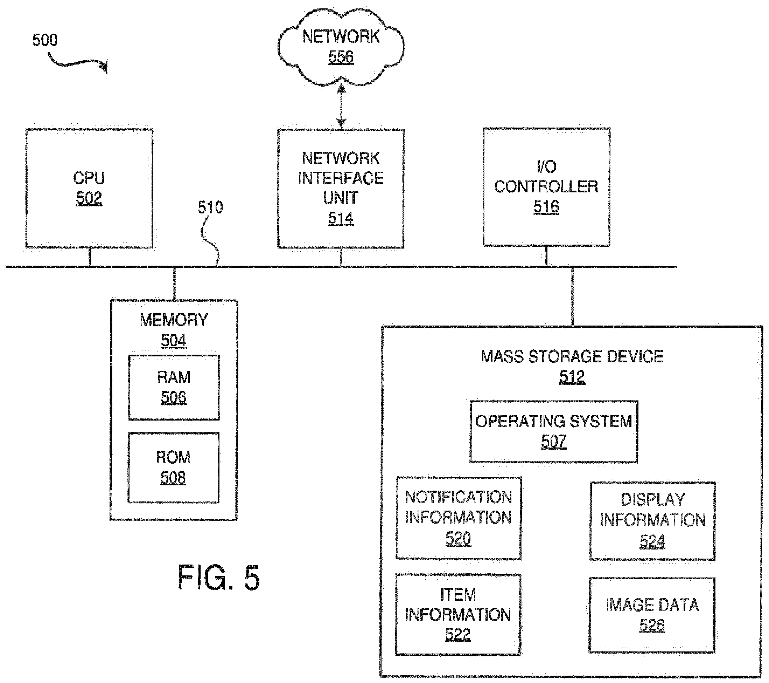

FIGURE 5 shows additional details of an example computer architecture 500 for a computer, such as the devices 110, 120, 130 and 220 (FIGURES 1, 2A, and 2B), capable of executing the program components described herein. Thus, the computer architecture 500 illustrated in FIGURE 5 illustrates an architecture for cart controller, a user client device, a server computer, mobile phone, a PDA, a smart phone, a desktop computer, a netbook computer, a tablet computer, an on-board computer, a game console, and/or a laptop computer. The computer architecture 500 may be utilized to execute any aspects of the software components presented herein.

The computer architecture 500 illustrated in FIGURE 5 includes a central processing unit 502 ("CPU"), a system memory 504, including a random access memory 506 ("RAM") and a read-only memory ("ROM") 508, and a system bus 510 that couples the memory 504 to the CPU 502. A basic input/output system containing the basic routines that help to transfer information between sub-elements within the computer architecture 500, such as during startup, is stored in the ROM 508. The computer architecture 500 further includes a mass storage device 512 for storing an operating system 507, data (such as notification information 520, item information 522, display information 524 and image data 526), and one or more application programs.

The mass storage device 512 is connected to the CPU 502 through a mass storage controller (not shown) connected to the bus 510. The mass storage device 512 and its associated computer-readable media provide non-volatile storage for the computer architecture 500. Although the description of computer-readable media contained herein refers to a mass storage device, such as a solid-state drive, a hard disk or CD-ROM drive, it should be appreciated by those skilled in the art that computer-readable media can be any available computer storage media or communication media that can be accessed by the computer architecture 500.

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner so as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture 500. For purposes the claims, the phrase "computer storage medium," "computer-readable storage medium" and variations thereof, does not include waves, signals, and/or other transitory and/or intangible communication media, per se.

According to various configurations, the computer architecture 500 may operate in a networked environment using logical connections to remote computers through the network 556 and/or another network (not shown). The computer architecture 500 may connect to the network 556 through a network interface unit 514 connected to the bus 510. It should be appreciated that the network interface unit 514 also may be utilized to connect to other types of networks and remote computer systems. The computer architecture 500 also may include an input/output controller 516 for receiving and processing input from a number of other devices, including a keyboard, mouse, game controller, television remote or electronic stylus (not shown in FIGURE 5). Similarly, the input/output controller 516 may provide output to a display screen, a printer, or other type of output device (also not shown in FIGURE 5).

It should be appreciated that the software components described herein may, when loaded into the CPU 502 and executed, transform the CPU 502 and the overall computer architecture 500 from a general-purpose computing system into a special-purpose computing system customized to facilitate the functionality presented herein. The CPU 502 may be constructed from any number of transistors or other discrete circuit elements, which may individually or collectively assume any number of states. More specifically, the CPU 502 may operate as a finite-state machine, in response to executable instructions contained within the software modules disclosed herein. These computer-executable instructions may transform the CPU 502 by specifying how the CPU 502 transitions between states, thereby transforming the transistors or other discrete hardware elements constituting the CPU 502.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In light of the above, it should be appreciated that many types of physical transformations take place in the computer architecture 500 in order to store and execute the software components presented herein. It also should be appreciated that the computer architecture 500 may include other types of computing devices, including hand-held computers, embedded computer systems, personal digital assistants, and other types of computing devices known to those skilled in the art. It is also contemplated that the computer architecture 500 may not include all of the components shown in FIGURE 5, may include other components that are not explicitly shown in FIGURE 5, or may utilize an architecture completely different than that shown in FIGURE 5.

FIGURE 6 depicts an illustrative distributed computing environment 600 capable of executing the software components described herein for automatically registering items in an automated physical shopping cart. Thus, the distributed computing environment 600 illustrated in FIGURE 6 can be utilized to execute many aspects of the software components presented herein. For example, the distributed computing environment 600 can be utilized to execute one or more aspects of the software components described herein.

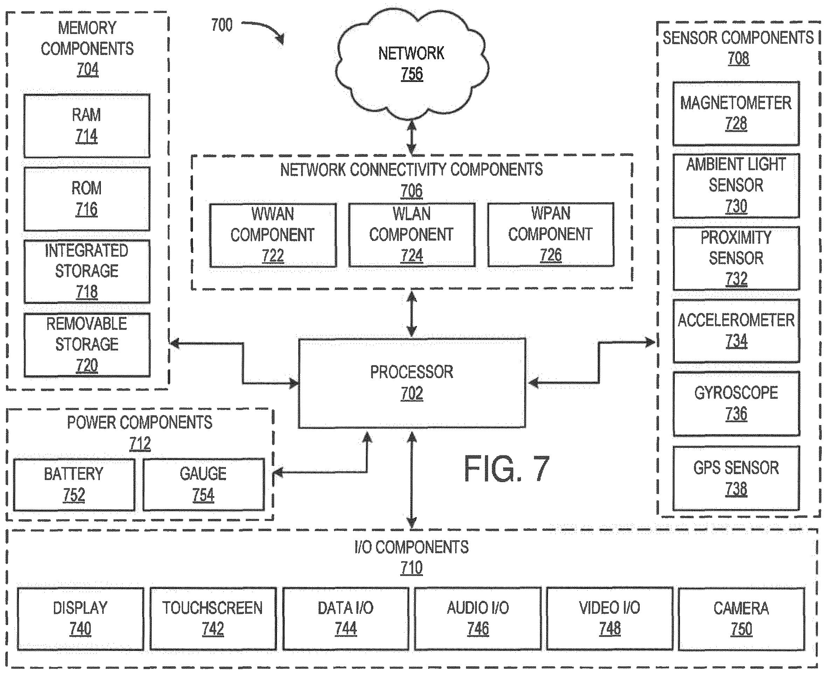

According to various implementations, the distributed computing environment 600 includes a computing environment 602 operating on, in communication with, or as part of the network 604. The network 604 may be or may include the network 556, described above. The network 604 also can include various access networks. One or more client devices 606A-806N (hereinafter referred to collectively and/or generically as "clients 606") can communicate with the computing environment 602 via the network 604 and/or other connections (not illustrated in FIGURE 6). In one illustrated configuration, the clients 606 include a computing device 606A, such as a laptop computer, a desktop computer, or other computing device; a slate or tablet computing device ("tablet computing device") 606B; a mobile computing device 606C such as a mobile telephone, a smart phone, an on-board computer, or other mobile computing device; a server computer 606D; and/or other devices 606N, which can include a hardware security module. It should be understood that any number of devices 606 can communicate with the computing environment 602. Two example computing architectures for the devices 606 are illustrated and described herein with reference to FIGURES 5 and 7. It should be understood that the illustrated devices 606 and computing architectures illustrated and described herein are illustrative only and should not be construed as being limited in any way.

In the illustrated configuration, the computing environment 602 includes application servers 608, data storage 610, and one or more network interfaces 612. According to various implementations, the functionality of the application servers 608 can be provided by one or more server computers that are executing as part of, or in communication with, the network 604. The application servers 608 can host various services, virtual machines, portals, and/or other resources. In the illustrated configuration, the application servers 608 host one or more virtual machines 614 for hosting applications or other functionality. According to various implementations, the virtual machines 614 host one or more applications and/or software modules for automatically registering items in an automated physical shopping cart. It should be understood that this configuration is illustrative only and should not be construed as being limiting in any way.

According to various implementations, the application servers 608 also include one or more notification services 620, inventory/list services 622, display services 624 and optical scan or image recognition services 625. The notification services 620 can include services for managing notifications sent to user client devices. The inventory/list services 622 can include services for maintaining an inventory or a shopping list of items. The display services 624 can include services for managing data sent for display to mobile client devices. The optical scan services 626 can include services for collecting and distributing image data from optical devices in mobile client devices and cart controllers and performing image recognition on the image data to identify items.

As shown in FIGURE 6, the application servers 608 also can host transaction services 623 for securely conducting payment transactions. Application servers can include other services, applications, portals, and/or other resources that can include, but are not limited to, data encryption, data sharing, or any other functionality.

As mentioned above, the computing environment 602 can include data storage 610. According to various implementations, the functionality of the data storage 610 is provided by one or more databases or data stores operating on, or in communication with, the network 604. The functionality of the data storage 610 also can be provided by one or more server computers configured to host data for the computing environment 602. The data storage 610 can include, host, or provide one or more real or virtual data stores 626A-826N (hereinafter referred to collectively and/or generically as "datastores 626"). The datastores 626 are configured to host data used or created by the application servers 608 and/or other data. Aspects of the datastores 626 may be associated with services for a automatically registering items in an automated physical shopping cart. Although not illustrated in FIGURE 6, the datastores 626 also can host or store web page documents, word documents, presentation documents, data structures, algorithms for execution by a recommendation engine, and/or other data utilized by any application program or another module.

The computing environment 602 can communicate with, or be accessed by, the network interfaces 612. The network interfaces 612 can include various types of network hardware and software for supporting communications between two or more computing devices including, but not limited to, mobile client devices, the clients 606 and the application servers 608. It should be appreciated that the network interfaces 612 also may be utilized to connect to other types of networks and/or computer systems.

It should be understood that the distributed computing environment 600 described herein can provide any aspects of the software elements described herein with any number of virtual computing resources and/or other distributed computing functionality that can be configured to execute any aspects of the software components disclosed herein. According to various implementations of the concepts and technologies disclosed herein, the distributed computing environment 600 may provide the software functionality described herein as a service to the clients using devices 606. It should be understood that the devices 606 can include real or virtual machines including, but not limited to, server computers, web servers, personal computers, mobile computing devices, smart phones, and/or other devices, which can include user input devices. As such, various configurations of the concepts and technologies disclosed herein enable any device configured to access the distributed computing environment 600 to utilize the functionality described herein for automatically registering items in an automated physical shopping cart, among other aspects.

Turning now to FIGURE 7, an illustrative computing device architecture 700 for a computing device that is capable of executing various software components is described herein for automatically registering items in an automated physical shopping cart. The computing device architecture 700 is applicable to computing devices, such as user client devices. In some configurations, the computing devices include, but are not limited to, mobile telephones, on-board computers, tablet devices, slate devices, portable video game devices, traditional desktop computers, portable computers (e.g., laptops, notebooks, ultra-portables, and netbooks), server computers, game consoles, and other computer systems. The computing device architecture 700 is applicable to the server device 110, client device 130 and controller device 220 shown in FIGURES 1, 2A and 2B, and computing devices 606A-N shown in FIGURE 6.

The computing device architecture 700 illustrated in FIGURE 7 includes a processor 702, memory components 704, network connectivity components 706, sensor components 708, input/output components 710, and power components 712. In the illustrated configuration, the processor 702 is in communication with the memory components 704, the network connectivity components 706, the sensor components 708, the input/output ("I/O") components 710, and the power components 712. Although no connections are shown between the individual components illustrated in FIGURE 7, the components can interact to carry out device functions. In some configurations, the components are arranged so as to communicate via one or more busses (not shown).

The processor 702 includes a central processing unit ("CPU") configured to process data, execute computer-executable instructions of one or more application programs, and communicate with other components of the computing device architecture 700 in order to perform various functionality described herein. The processor 702 may be utilized to execute aspects of the software components presented herein and, particularly, those that utilize, at least in part, secure data.

In some configurations, the processor 702 includes a graphics processing unit ("GPU") configured to accelerate operations performed by the CPU, including, but not limited to, operations performed by executing secure computing applications, general-purpose scientific and/or engineering computing applications, as well as graphics-intensive computing applications such as high resolution video (e.g., 620P, 1080P, and higher resolution), video games, three-dimensional ("3D") modeling applications, and the like. In some configurations, the processor 702 is configured to communicate with a discrete GPU (not shown). In any case, the CPU and GPU may be configured in accordance with a co-processing CPU/GPU computing model, wherein a sequential part of an application executes on the CPU and a computationally-intensive part is accelerated by the GPU.

In some configurations, the processor 702 is, or is included in, a system-on-chip ("SoC") along with one or more of the other components described herein below. For example, the SoC may include the processor 702, a GPU, one or more of the network connectivity components 706, and one or more of the sensor components 708. In some configurations, the processor 702 is fabricated, in part, utilizing a package-on-package ("PoP") integrated circuit packaging technique. The processor 702 may be a single core or multi-core processor.

The processor 702 may be created in accordance with an ARM architecture, available for license from ARM HOLDINGS of Cambridge, United Kingdom. Alternatively, the processor 702 may be created in accordance with an x86 architecture, such as is available from INTEL CORPORATION of Mountain View, California and others. In some configurations, the processor 702 is a SNAPDRAGON SoC, available from QUALCOMM of San Diego, California, a TEGRA SoC, available from NVIDIA of Santa Clara, California, a HUMMINGBIRD SoC, available from SAMSUNG of Seoul, South Korea, an Open Multimedia Application Platform ("OMAP") SoC, available from TEXAS INSTRUMENTS of Dallas, Texas, a customized version of any of the above SoCs, or a proprietary SoC.

The memory components 704 include a random access memory ("RAM") 714, a read-only memory ("ROM") 716, an integrated storage memory ("integrated storage") 718, and a removable storage memory ("removable storage") 720. In some configurations, the RAM 714 or a portion thereof, the ROM 716 or a portion thereof, and/or some combination of the RAM 714 and the ROM 716 is integrated in the processor 702. In some configurations, the ROM 716 is configured to store a firmware, an operating system or a portion thereof (e.g., operating system kernel), and/or a bootloader to load an operating system kernel from the integrated storage 718 and/or the removable storage 720.

The integrated storage 718 can include a solid-state memory, a hard disk, or a combination of solid-state memory and a hard disk. The integrated storage 718 may be soldered or otherwise connected to a logic board upon which the processor 702 and other components described herein also may be connected. As such, the integrated storage 718 is integrated in the computing device. The integrated storage 718 is configured to store an operating system or portions thereof, application programs, data, and other software components described herein.

The removable storage 720 can include a solid-state memory, a hard disk, or a combination of solid-state memory and a hard disk. In some configurations, the removable storage 720 is provided in lieu of the integrated storage 718. In other configurations, the removable storage 720 is provided as additional optional storage. In some configurations, the removable storage 720 is logically combined with the integrated storage 718 such that the total available storage is made available as a total combined storage capacity. In some configurations, the total combined capacity of the integrated storage 718 and the removable storage 720 is shown to a user instead of separate storage capacities for the integrated storage 718 and the removable storage 720.

The removable storage 720 is configured to be inserted into a removable storage memory slot (not shown) or other mechanism by which the removable storage 720 is inserted and secured to facilitate a connection over which the removable storage 720 can communicate with other components of the computing device, such as the processor 702. The removable storage 720 may be embodied in various memory card formats including, but not limited to, PC card, CompactFlash card, memory stick, secure digital ("SD"), miniSD, microSD, universal integrated circuit card ("UICC") (e.g., a subscriber identity module ("SIM") or universal SIM ("USIM")), a proprietary format, or the like.

It can be understood that one or more of the memory components 704 can store an operating system. According to various configurations, the operating system may include, but is not limited to, server operating systems such as various forms of UNIX certified by The Open Group and LINUX certified by the Free Software Foundation, or aspects of Software-as-a-Service (SaaS) architectures, such as MICROSFT AZURE from Microsoft Corporation of Redmond, Washington or AWS from Amazon Corporation of Seattle, Washington. The operating system may also include WINDOWS MOBILE OS from Microsoft Corporation of Redmond, Washington, WINDOWS PHONE OS from Microsoft Corporation, WINDOWS from Microsoft Corporation, MAC OS or IOS from Apple Inc. of Cupertino, California, and ANDROID OS from Google Inc. of Mountain View, California. Other operating systems are contemplated.

The network connectivity components 706 include a wireless wide area network component ("WWAN component") 722, a wireless local area network component ("WLAN component") 724, and a wireless personal area network component ("WPAN component") 726. The network connectivity components 706 facilitate communications to and from the network 756 or another network, which may be a WWAN, a WLAN, or a WPAN. Although only the network 756 is illustrated, the network connectivity components 706 may facilitate simultaneous communication with multiple networks, including the network 756 of FIGURE 7. For example, the network connectivity components 706 may facilitate simultaneous communications with multiple networks via one or more of a WWAN, a WLAN, or a WPAN.

The network 756 may be or may include a WWAN, such as a mobile telecommunications network utilizing one or more mobile telecommunications technologies to provide voice and/or data services to a computing device utilizing the computing device architecture 700 via the WWAN component 722. The mobile telecommunications technologies can include, but are not limited to, Global System for Mobile communications ("GSM"), Code Division Multiple Access ("CDMA") ONE, CDMA7000, Universal Mobile Telecommunications System ("UMTS"), Long Term Evolution ("LTE"), and Worldwide Interoperability for Microwave Access ("WiMAX"). Moreover, the network 756 may utilize various channel access methods (which may or may not be used by the aforementioned standards) including, but not limited to, Time Division Multiple Access ("TDMA"), Frequency Division Multiple Access ("FDMA"), CDMA, wideband CDMA ("W-CDMA"), Orthogonal Frequency Division Multiplexing ("OFDM"), Space Division Multiple Access ("SDMA"), and the like. Data communications may be provided using General Packet Radio Service ("GPRS"), Enhanced Data rates for Global Evolution ("EDGE"), the High-Speed Packet Access ("HSPA") protocol family including High-Speed Downlink Packet Access ("HSDPA"), Enhanced Uplink ("EUL") or otherwise termed High-Speed Uplink Packet Access ("HSUPA"), Evolved HSPA ("HSPA+"), LTE, and various other current and future wireless data access standards. The network 756 may be configured to provide voice and/or data communications with any combination of the above technologies. The network 756 may be configured to or be adapted to provide voice and/or data communications in accordance with future generation technologies.

In some configurations, the WWAN component 722 is configured to provide dual- multi-mode connectivity to the network 756. For example, the WWAN component 722 may be configured to provide connectivity to the network 756, wherein the network 756 provides service via GSM and UMTS technologies, or via some other combination of technologies. Alternatively, multiple WWAN components 722 may be utilized to perform such functionality, and/or provide additional functionality to support other non-compatible technologies (i.e., incapable of being supported by a single WWAN component). The WWAN component 722 may facilitate similar connectivity to multiple networks (e.g., a UMTS network and an LTE network).

The network 756 may be a WLAN operating in accordance with one or more Institute of Electrical and Electronic Engineers ("IEEE") 602.11 standards, such as IEEE 602.11a, 602.11b, 602.1 1g, 602.11n, and/or future 602.11 standard (referred to herein collectively as WI-FI). Draft 602.11 standards are also contemplated. In some configurations, the WLAN is implemented utilizing one or more wireless WI-FI access points. In some configurations, one or more of the wireless WI-FI access points are another computing device with connectivity to a WWAN that are functioning as a WI-FI hotspot. The WLAN component 724 is configured to connect to the network 756 via the WI-FI access points. Such connections may be secured via various encryption technologies including, but not limited to, WI-FI Protected Access ("WPA"), WPA2, Wired Equivalent Privacy ("WEP"), and the like.

The network 756 may be a WPAN operating in accordance with Infrared Data Association ("IrDA"), BLUETOOTH, wireless Universal Serial Bus ("USB"), Z-Wave, ZIGBEE, or some other short-range wireless technology. In some configurations, the WPAN component 726 is configured to facilitate communications with other devices, such as peripherals, computers, or other computing devices via the WPAN.

The sensor components 708 include a magnetometer 728, an ambient light sensor 730, a proximity sensor 732, an accelerometer 734, a gyroscope 736, and a Global Positioning System sensor ("GPS sensor") 738. It is contemplated that other sensors, such as, but not limited to, temperature sensors or shock detection sensors, also may be incorporated in the computing device architecture 700.

The I/O components 710 include a display 740, a touchscreen 742, a data I/O interface component ("data I/O") 744, an audio I/O interface component ("audio I/O") 746, a video I/O interface component ("video I/O") 748, and a camera 750. In some configurations, the display 740 and the touchscreen 742 are combined. In some configurations two or more of the data I/O component 744, the audio I/O component 746, and the video I/O component 748 are combined. The I/O components 710 may include discrete processors configured to support the various interfaces described below or may include processing functionality built-in to the processor 702.

The illustrated power components 712 include one or more batteries 752, which can be connected to a battery gauge 754. The batteries 752 may be rechargeable or disposable. Rechargeable battery types include, but are not limited to, lithium polymer, lithium ion, nickel cadmium, and nickel metal hydride. Each of the batteries 752 may be made of one or more cells.

The power components 712 may also include a power connector, which may be combined with one or more of the aforementioned I/O components 710. The power components 712 may interface with an external power system or charging equipment via an I/O component.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

The present disclosure is made in light of the following clauses:
Clause 1: A computer-implemented method for automatically registering items in an automated physical shopping cart, the method comprising: detecting a change in a weight of items in the cart; receiving image data for items in the cart from an optical device; determining whether a correlated item was identified in the received image data that was scanned in correlation with the detected change in the weight of items in the cart; and if no correlated item was identified, then causing a message to be displayed on a User Interface (UI) indicating that no item was detected.
Clause 2. The method of Clause 1, where the step of causing a message to be displayed on a UI indicating that no item was detected includes generating a prompt on the UI asking a user to enter item information for the correlated item.
Clause 3. The method of Clause 1, where: the step of receiving image data for items in the cart from an optical device comprises receiving image data for items in the cart from an optical device in a user client device; and the step of determining whether a correlated item was identified in the received image data that was scanned in correlation with the detected change in the weight of items in the cart comprises determining whether a correlated item was identified in the received image data received from the user client device that was scanned in correlation with the detected change in the weight of items in the cart.
Clause 4. The method of Clause 1, where the step of causing a message to be displayed on a User Interface (UI) indicating that no item was detected comprises causing a message to be displayed on a User Interface (UI) indicating that no item was detected on a UI of a user client device.
Clause 5. The method of Clause 1, where the step determining whether a correlated item was identified in the received image data that was scanned in correlation with the detected change in the weight of items in the cart includes perform image recognition on the received image data to identify the correlated item.
Clause 6. The method of Clause 1, where the method includes: determining a weight of the correlated item based on the change in the weight of items in the cart; obtaining a price by weight for the correlated item; calculating a total price for the correlated item based on the weight of the correlated item and the price by weight for the correlated item; and causing the total price for the correlated item to be displayed on the UI.
Clause 7. The method of Clause 1, where the method includes: if the correlated item was identified, then sending a notification to one of an inventory application and a shopping list application indicating that the correlated item was added to the cart.
Clause 8. An automated shopping cart system, the system comprising: a chassis having a plurality of wheels configured to permit motion of the chassis on a surface; a basket for receiving and containing one or more items; a weight detector disposed between the basket and the chassis and configured to detect a weight of the items in the basket and generate a weight signal; a cart controller coupled to the weight detector to receive the weight signal, the cart controller being configured to receive item image data from one or more optical devices, and the cart controller having one or more processors and at least one computer storage medium having computer executable instructions stored thereon which, when executed by the one or more processors, cause the one or more processors to execute a method for automatically registering items comprising: detecting a change in a weight of the items in the cart using the weight signal from the weight detector; receiving the item image data; determining from the received item image data whether a correlated item was identified in correlation with the detected change in the weight of items in the cart; and if no correlated item was identified, then causing a message to be displayed on a User Interface (UI) indicating that no item was detected.
Clause 9. The automated shopping cart system of Clause 8, where: the message to be displayed on a UI indicating that no item was detected includes generating a prompt on the UI asking a user to enter item information for the correlated item; and the UI comprises one of a graphical user interface disposed on the automated shopping cart system and coupled to the cart controller and a user interface of a user client device.
Clause 10. The automated shopping cart system of Clause 8, where: the cart controller includes a communications transceiver; and the method for automatically registering items includes: establishing a communication link between the cart controller and a user client device, the step of receiving the item image data comprises receiving the item image data from the user client device, the step of causing a message to be displayed on a User Interface (UI) indicating that no item was detected comprises causing a message to be displayed on a UI of the user client device indicating that no item was detected.
Clause 11. The automated shopping cart system of Clause 10, where the step of receiving the item image data from the user client device comprises: receiving item image from an image recognition capability in the user client device.
Clause 12. The automated shopping cart system of Clause 10, where the method for automatically registering items includes: if the correlated item was identified, then sending a notification to a shopping list application in the user client device indicating that the correlated item was added to the cart.
Clause 13. The automated shopping cart system of Clause 8, where: the cart controller includes an optical device; and the step of receiving the item image comprises receiving the item image data from the optical device.
Clause 14. The automated shopping cart system of Clause 8, where the method for automatically registering items includes: determining a weight of the correlated item based on the weight signal from the weight detector; obtaining a price by weight for the correlated item from a server; calculating a total price for the correlated item based on the weight of the correlated item and the price by weight for the correlated item; and causing the total price for the correlated item to be displayed on the UI.
Clause 15. A computer storage medium having computer executable instructions stored thereon which, when executed by one or more processors, cause the processors to execute a method in a user client device for automatically registering items in an automated shopping cart, the method comprising: establishing a communication link between a user client device and a cart controller of an automated shopping cart; receiving information from the cart controller indicating that no item was detected; responsive to receiving the information from the cart controller indicating that no item was detected, displaying a message on a User Interface (UI) of the user client device indicating that no item was detected.
Clause 16. The computer storage medium of Clause 15, where: the message displayed on the UI indicating that no item was detected includes a prompt on the UI asking a user to scan an item for item information or enter item information for the item; and the method includes: scanning an item using an optical device of the user client device to obtain image data; using image recognition on image data to determine item information, and sending the item information to the cart controller.
Clause 17. The computer storage medium of Clause 15, where the method includes: receiving information from the cart controller for display; displaying the information received from the cart controller on the UI of the user client device.
Clause 18. The computer storage medium of Clause 15, where: the information received from the cart controller for display includes one or more of a price for an item and a weight of an item; and the step of displaying the information received from the cart controller on the UI of the user client device includes displaying one or more of the price for the item and the weight of the item.
Clause 19. The computer storage medium of Clause 15, where the method includes: displaying a set of items as a shopping list; receiving information from the cart controller identifying an item in the automated shopping cart; searching the set of items for a matching item that matches the identified item; and if the matching item is found, then altering the display of the matching item in the set of items to indicate that the matching item is in the automated shopping cart.
Clause 20. The computer storage medium of Clause 15, where the method includes: receiving a debit amount from the cart controller indicating a price for the items in the automated shopping cart; committing a debit transaction to pay the price of the items in the automated shopping cart; and if the debit transaction is successfully committed, sending a debit transaction confirmation to the cart controller.

## Claims

1. A computer-implemented method for automatically registering items in an automated physical shopping cart, the method comprising:
detecting a change in a weight of items in the cart;
receiving image data for items in the cart from an optical device;
determining whether a correlated item was identified in the received image data that was scanned in correlation with the detected change in the weight of items in the cart; and
if no correlated item was identified, then causing a message to be displayed on a User Interface (UI) indicating that no item was detected.

2. The method of claim 1,
where the step of causing a message to be displayed on a UI indicating that no item was detected includes generating a prompt on the UI asking a user to enter item information for the correlated item;
where:
the step of receiving image data for items in the cart from an optical device may comprise receiving image data for items in the cart from an optical device in a user client device; and
the step of determining whether a correlated item was identified in the received image data that was scanned in correlation with the detected change in the weight of items in the cart may comprise determining whether a correlated item was identified in the received image data received from the user client device that was scanned in correlation with the detected change in the weight of items in the cart.

3. The method of claim 1 or 2, where the step of causing a message to be displayed on a User Interface (UI) indicating that no item was detected comprises causing a message to be displayed on a User Interface (UI) indicating that no item was detected on a UI of a user client device;
where the step determining whether a correlated item was identified in the received image data that was scanned in correlation with the detected change in the weight of items in the cart may include performing image recognition on the received image data to identify the correlated item.

4. The method of any one of the preceding claims,
where the method includes:
determining a weight of the correlated item based on the change in the weight of items in the cart;
obtaining a price by weight for the correlated item;
calculating a total price for the correlated item based on the weight of the correlated item and the price by weight for the correlated item; and
causing the total price for the correlated item to be displayed on the UI;
where the method may further include:
if the correlated item was identified, then sending a notification to one of an inventory application and a shopping list application indicating that the correlated item was added to the cart.

5. An automated shopping cart system, the system comprising:
a chassis having a plurality of wheels configured to permit motion of the chassis on a surface;
a basket for receiving and containing one or more items;
a weight detector disposed between the basket and the chassis and configured to detect a weight of the items in the basket and generate a weight signal;
a cart controller coupled to the weight detector to receive the weight signal, the cart controller being configured to receive item image data from one or more optical devices, and the cart controller having one or more processors and at least one computer storage medium having computer executable instructions stored thereon which, when executed by the one or more processors, cause the one or more processors to execute a method for automatically registering items comprising:
detecting a change in a weight of the items in the cart using the weight signal from the weight detector;
receiving the item image data;
determining from the received item image data whether a correlated item was identified in correlation with the detected change in the weight of items in the cart; and
if no correlated item was identified, then causing a message to be displayed on a User Interface (UI) indicating that no item was detected.

6. The automated shopping cart system of Claim 5, where:
the message to be displayed on a UI indicating that no item was detected includes generating a prompt on the UI asking a user to enter item information for the correlated item; and
the UI comprises one of a graphical user interface disposed on the automated shopping cart system and coupled to the cart controller and a user interface of a user client device.

7. The automated shopping cart system of Claim 5 or 6, where:
the cart controller includes a communications transceiver; and
the method for automatically registering items includes:
establishing a communication link between the cart controller and a user client device,
the step of receiving the item image data comprises receiving the item image data from the user client device,
the step of causing a message to be displayed on a User Interface (UI) indicating that no item was detected comprises causing a message to be displayed on a UI of the user client device indicating that no item was detected.

8. The automated shopping cart system of Claim 7,
where the step of receiving the item image data from the user client device comprises:
receiving item image from an image recognition capability in the user client device;
where the method for automatically registering items may include:
if the correlated item was identified, then sending a notification to a shopping list application in the user client device indicating that the correlated item was added to the cart.

9. The automated shopping cart system of any one of claims 5 to 8, where:
the cart controller includes an optical device; and
the step of receiving the item image comprises receiving the item image data from the optical device.

10. The automated shopping cart system of any one of claims 5 to 9, where the method for automatically registering items includes:
determining a weight of the correlated item based on the weight signal from the weight detector;
obtaining a price by weight for the correlated item from a server;
calculating a total price for the correlated item based on the weight of the correlated item and the price by weight for the correlated item; and
causing the total price for the correlated item to be displayed on the UI.

11. A computer storage medium having computer executable instructions stored thereon which, when executed by one or more processors, cause the processors to execute a method in a user client device for automatically registering items in an automated shopping cart, the method comprising:
establishing a communication link between a user client device and a cart controller of an automated shopping cart;
receiving information from the cart controller indicating that no item was detected;
responsive to receiving the information from the cart controller indicating that no item was detected, displaying a message on a User Interface (UI) of the user client device indicating that no item was detected.

12. The computer storage medium of Claim 11,
where:
the message displayed on the UI indicating that no item was detected includes a prompt on the UI asking a user to scan an item for item information or enter item information for the item; and
the method includes:
scanning an item using an optical device of the user client device to obtain image data;
using image recognition on image data to determine item information, and
sending the item information to the cart controller;
where the method may further include:
receiving information from the cart controller for display;
displaying the information received from the cart controller on the UI of the user client device.

13. The computer storage medium of Claim 11 or 12, where:
the information received from the cart controller for display includes one or more of a price for an item and a weight of an item; and
the step of displaying the information received from the cart controller on the UI of the user client device includes displaying one or more of the price for the item and the weight of the item.

14. The computer storage medium of any one of claims 11 to 13, where the method includes:
displaying a set of items as a shopping list;
receiving information from the cart controller identifying an item in the automated shopping cart;
searching the set of items for a matching item that matches the identified item; and
if the matching item is found, then altering the display of the matching item in the set of items to indicate that the matching item is in the automated shopping cart.

15. The computer storage medium of any one of claims 11 to 15, where the method includes:
receiving a debit amount from the cart controller indicating a price for the items in the automated shopping cart;
committing a debit transaction to pay the price of the items in the automated shopping cart; and
if the debit transaction is successfully committed, sending a debit transaction confirmation to the cart controller.
